# EUROPEAN PATENT SPECIFICATION

(11) **EP 2 382 274 B1**
(45) Date of publication and mention of the grant of the patent: **22.04.2015**
(21) Application number: 09736337.8
(22) Date of filing: 24.09.2009
(51) Int. Cl.: C09D 5/44, C09D 163/00

(54) **AQUEOUS COATING COMPOSITION COMPRISING PYRIDINE GROUP-CONTAINING ELECTROCOAT RESIN**
WÄSSRIGE BESCHICHTUNGSZUSAMMENSETZUNG ENTHALTEND ELECTROABSCHEIDBARES HARZ MIT EINER PYRIDINGRUPPE
COMPOSITION AQUEUSE DE REVETEMENT COMPRENANT UNE RÉSINE ELECTROLYTIQUE COMPRENANT UN GROUPE PYRIDINE

(30) Priority: 29.12.2008 US 344666; 29.12.2008 US 344807
(43) Date of publication of application: 02.11.2011
(73) Proprietor: BASF Coatings GmbH, 48165 Münster (DE)
(72) Inventor: CHOUAI, Abdellatif, Prairieville,LA 70769 (US); DECEMBER, Timothy s., Rochester Hills MI 48307 (US)
(74) Representative: Leifert & Steffan
(86) International application number: PCT/US2009/058189
(87) International publication number: WO 2010/077404

(56) References cited:
- GB-A- 2 184 124
- GB-A- 2 250 512
- US-A- 4 310 646
- US-A- 5 070 159
- DATABASE WPI Week 200429 Thomson Scientific, London, GB; AN 2004-307583 XP002582707 -& JP 2003 226982 A (KANSAI PAINT CO LTD) 15 August 2003 (2003-08-15)

## Description

### FIELD OF THE DISCLOSURE

The invention relates to electrocoat coating compositions, methods of preparing them, methods of electrodeposition of coatings onto a conductive substrate, and electrodeposited coatings.

### BACKGROUND OF THE DISCLOSURE

The statements in this section merely provide background information related to this disclosure and may not constitute prior art.

Industrial coating of metal articles that will be used in corrosive environments may include application of one or more inorganic and organic treatments and coatings. Painting systems ("paint shops") in automotive assembly plants are large, complex, and expensive. Metal automotive vehicle bodies (the "body-in-white") and parts, for instance, are given a many-step treatment of cleaning in one or more cleaning baths or spray tanks, application of an aqueous phosphate coating material as a metal pretreatment step in a phosphating bath, then various rinses and additional finishing treatments, such as described in Claffey, U.S. Patent No. 5,868,820. The phosphating pre-treatment steps are undertaken to improve corrosion resistance of the metal and adhesion of subsequent coatings to the metal. The cleaning and phosphating steps may have 10 or 12 individual treatment stations of spray equipment or dip tanks.

An electrodeposition coating ("electrocoat") is applied after the pretreatment steps to the metal vehicle body. Electrocoat baths usually comprise an aqueous dispersion or emulsion of a principal film-forming resin ("polymer" and "resin" are used interchangeably in this disclosure), having ionic stabilization in water or a mixture of water and organic cosolvent. In automotive or industrial applications for which durable electrocoat films are desired, the electrocoat compositions are formulated to be curable (thermosetting) compositions. This is usually accomplished by emulsifying with the principal film-forming resin a crosslinking agent that can react with functional groups on the principal resin under appropriate conditions, such as with the application of heat, and so cure the coating. During electrodeposition, coating material containing the ionically-charged resin having a relatively low molecular weight is deposited onto a conductive substrate by submerging the substrate in the electrocoat bath and then applying an electrical potential between the substrate and a pole of opposite charge, for example, a stainless steel electrode. The charged coating material migrates to and deposits on the conductive substrate. The coated substrate is then heated to cure or crosslink the coating.

One of the advantages of electrocoat compositions and processes is that the applied coating composition forms a uniform and contiguous layer over a variety of metallic substrates regardless of shape or configuration. This is especially advantageous when the coating is applied as an anticorrosive coating onto a substrate having an irregular surface, such as a motor vehicle body. The even, continuous coating layer over all portions of the metallic substrate provides maximum anticorrosion effectiveness. The phosphate pre-treatment, however, has up to now been an indispensable step in protecting against corrosion for automotive vehicle bodies.

Dietz et al., U.S. Patent No. 5,070,159 discloses a dispersant useful for dispersing pigments in aqueous coating compositions, the dispersant being a reaction product of a novolac epoxy resin, a long-chain aliphatic amine, and a further amine that may include a heterocyclic ring with a nitrogen atom.

A number of patents disclose using certain metal oxides in electrocoat coating compositions or other metal coatings. Among these are Gros et al., U.S. Pat. Appl. Pub. No. 2006/0058423; (manganese oxide); Poulet et al., U.S. Pat. Appl. Pub. No. 2006/0261311 (yttrium, zirconium, lanthanum, cerium, praseodymium and neodymium oxides or salts); Maze et al., US Pat. No. 7,081,157 (MoO₃); Matsuda et al., JP 2003226982 (vanadium pentoxide); Mizoguchi et al., JP2003129005 (zinc oxide); and Kawaraya et al., U.S. Pat. Appl. Pub. No. 2007/0149655 (zirconium oxide)..

### SUMMARY OF THE DISCLOSURE

We disclose a composition and process for electrodepositing an electrocoat coating on a metal substrate, including an unphosphated metal substrate (that is, a metal substrate that has not undergone a phosphate pretreatment), in which the electrocoat coating provides excellent corrosion protection.

The process uses an aqueous electrocoat coating composition, also called an electrocoat bath, with a binder comprising a cathodically or anodically electrodepositable resin having at least one amine-containing aromatic ring moiety. For convenience, "aromatic amine group" will be used in this disclosure to refer to an amine group in which the nitrogen is part of an aromatic ring, while "aliphatic amine group" will be used to refer to amines in which the nitrogen is not part of an aromatic ring, regardless of whether the compound contains an aromatic ring. "Resin" is used in this disclosure to encompass resin, oligomer, and polymer. "Binder" refers to the film-forming components of the coating composition. Typically the binder is thermosetting or curable.

We also disclose a process in which the electrocoat coating composition includes a binder comprising a cathodically or anodically electrodepositable resin having at least one amine-containing aromatic ring moiety and a metal oxide selected from the group consisting of bismuth oxide, vanadium oxide, manganese oxide, cobalt oxide, zinc oxide, strontium oxide, yttrium oxide, molybdenum oxide, zirconium oxide, lanthanum oxide, oxides of the lanthanide series of elements, and combinations of these.

In one embodiment, the aromatic amine group-containing resin also has an aliphatic amine group.

The aromatic amine group-containing resin may be an epoxy resin or a vinyl (e.g., an acrylic) resin. The aromatic amine moieties of the resin are nucleophilic and are available to coordinate to the metal substrate surface, enhancing corrosion resistance of the electrocoat coating. The aromatic amine group-containing resin comprises a pyridine group, a pyrazine group, a pyrimidine group, a pyridazine group, a phezine group, an isoqinoline group, a quiinoline group, a phthalazine group, a phthrydine group, a cinnoline group , a carbazole group, a purine group, an imidazole group, a triazole group, a benzimidazole group, a benzimidazolone group, a thiazole group, a benzothiazole group, a pyrazole group, a pyrazolone group, a thiadiazole group, or a combination of these.

In certain embodiments, the electrodeposition coating composition binder includes from about 0.01 to about 99% by weight of the aromatic amine group-containing resin. Among these embodiments are those in which the electrodeposition coating composition binder includes from about 1 to about 90% by weight of the aromatic amine group-containing resin and those in which the electrodeposition coating composition binder includes from about 5 to about 80% by weight of the aromatic amine group-containing resin.

In certain embodiments, the electrodeposition coating composition includes from about 0.01 to about 1 percent by weight of the metal oxide based on total binder solids weight.

In certain embodiments, the binder comprises a crosslinker for the aromatic amine group-containing resin. In certain embodiments, the binder comprises a second electrodepositable resin other than the aromatic amine group-containing resin. In any of these embodiments, the binder may also comprises a crosslinker which reacts during cure of the electrodeposited coating layer with the aromatic amine group-containing resin, the second, electrodepositable resin, or both. In these embodiments, electrodeposition coating composition binder may include from about 0.01 to about 30 % by weight of the aromatic amine group-containing resin and from about 40 to about 80 % by weight of the second, electrodepositable resin. The electrodeposition coating composition binder may in certain embodiments include from about 1 to about 30 % by weight or from about 5 to about 20 % by weight of the aromatic amine group-containing resin and from about 45 to about 75 % by weight or from about 50 to about 70 % by weight of the second, electrodepositable resin.

We disclose a method of making an electrocoat coating composition in which an aliphatic secondary amine group of a compound also having an aromatic amine group is reacted with a binder resin to provide a resin with an aliphatic tertiary amine group and an aromatic amine group. The binder resin is combined with a crosslinker that is reactive under curing conditions with the binder resin to provide an electrocoat coating binder; the tertiary amine group is salted with an acid; and the electrocoat coating binder is dispersed in an aqueous medium to provide an aqueous electrodeposition coating composition. In certain embodiments, the electrocoat coating binder is dispersed in an aqueous medium and combined with a metal oxide selected from the group consisting of bismuth oxide, vanadium oxide, manganese oxide, cobalt oxide, zinc oxide, strontium oxide, yttrium oxide, molybdenum oxide, zirconium oxide, lanthanum oxide, oxides of the lanthanide series of elements, and combinations of these to provide an aqueous electrodeposition coating composition.

We also disclose a method of coating an electrically conductive substrate, such as a metal automotive vehicle body or part, which comprises placing the electrically conductive substrate into an aqueous electrodeposition coating composition having an electrodepositable binder comprising an aromatic amine group-containing resin and, using the electrically conductive substrate as the cathode, passing a current through the aqueous electrodeposition coating composition to deposit a coating layer comprising the binder onto the electrically conductive substrate. The deposited coating layer may then be cured to a cured coating layer. Subsequent coating layers may be applied on the (optionally cured) electrodeposited coating layer. For example, the electrodeposited coating layer may have other layers such as an optional spray-applied primer surfacer and a topcoat layer or topcoat layers (e.g., a colored basecoat layer and a clearcoat layer) applied over the electrodeposited coating layer.

We further disclose embodiments of the method of coating an electrically conductive substrate by placing the electrically conductive substrate into an aqueous electrodeposition coating composition comprising a metal oxide selected from the group consisting of bismuth oxide, vanadium oxide, manganese oxide, cobalt oxide, zinc oxide, strontium oxide, yttrium oxide, molybdenum oxide, zirconium oxide, lanthanum oxide, oxides of the lanthanide series of elements and combinations of these and also comprising an electrodepositable binder comprising an aromatic amine group-containing resin and, using the electrically conductive substrate as the cathode, passing a current through the aqueous electrodeposition coating composition to deposit a coating layer comprising the binder onto the electrically conductive substrate. Again, the deposited coating layer may then be cured to a cured coating layer and subsequent coating layers such as an optional spray-applied primer surfacer and a topcoat layer or topcoat layers (e.g., a colored basecoat layer and a clearcoat layer) may be applied on the (optionally cured) electrodeposited coating layer and cured.

In one embodiment of the method, the electrically conductive substrate is unphosphated before it is coated with an electrodeposited coating comprising the aromatic amine group-containing resin; that is, the substrate is free of a phosphate pre-treatment.

In one embodiment of the method, a metal automotive vehicle body is cleaned, and the cleaned metal automotive vehicle body is electrodeposited with an aqueous coating composition comprising the aromatic amine group-containing resin and, optionally, a metal oxide selected from the group consisting of bismuth oxide, vanadium oxide, manganese oxide, cobalt oxide, zinc oxide, strontium oxide, yttrium oxide, molybdenum oxide, zirconium oxide, lanthanum oxide, oxides of the lanthanide series of elements, and combinations of these.. Thus, no phosphate pretreatment is used. The aromatic amine group-containing resin may be electrodepositable or the binder of the electrocoat coating composition may include a second, electrodepositable resin that does not have aromatic amine groups or both, and generally a crosslinker reactive with one or both resins is included in the coating composition so that the electrodeposited coating layer may be cured.

A coated, metal substrate comprises an electrically deposited coating layer on the substrate, the electrically deposited coating layer comprising a cured coating formed from a binder comprising a aromatic amine group-containing resin. In various embodiments, the binder further comprises a crosslinker reactive with the aromatic amine group-containing resin, a second, electrodepositable resin, or both that reacts during cure to form the cured coating. In various embodiments the electrically deposited coating layer further comprises a metal oxide selected from the group consisting of bismuth oxide, vanadium oxide, manganese oxide, cobalt oxide, zinc oxide, strontium oxide, yttrium oxide, molybdenum oxide, zirconium oxide, lanthanum oxide, oxides of the lanthanide series of elements, and combinations of these. The cured coating provides unexpectedly strong resistance to corrosion. The unexpected resistance to corrosion is thought to be due to interactions between the aromatic amine groups of the resin, the metal oxide, and the metallic substrate. While not wishing to be bound by theory, it is believed that the aromatic amine groups of the resin, which have a remarkably strong affinity for metals, interact with both the metal substrate and the metal oxide to enhance the anticorrosive effectiveness of the metal oxide.

"A," "an," "the," "at least one," and "one or more" are used interchangeably to indicate that at least one of the item is present; a plurality of such items may be present. Other than in the working examples provides at the end of the detailed description, all numerical values of parameters (e.g., of quantities or conditions) in this specification, including the appended claims, are to be understood as being modified in all instances by the term "about" whether or not "about" actually appears before the numerical value. "About" indicates that the stated numerical value allows some slight imprecision (with some approach to exactness in the value; approximately or reasonably close to the value; nearly). If the imprecision provided by "about" is not otherwise understood in the art with this ordinary meaning, then "about" as used herein indicates at least variations that may arise from ordinary methods of measuring and using such parameters. In addition, disclosure of ranges includes disclosure of all values and further divided ranges within the entire range.

Further areas of applicability will become apparent from the description provided herein. It should be understood that the description and specific examples are intended for purposes of illustration only and are not intended to limit the scope of the present disclosure.

### DETAILED DESCRIPTION

The following description is merely exemplary in nature and is not intended to limit the present disclosure, application, or uses.

A metal substrate, which may be unphosphated, is electrocoated with an aqueous electrocoat coating composition having a binder comprising a aromatic amine group-containing resin, the coating composition optionally also comprising a metal oxide selected from the group consisting of bismuth oxide, vanadium oxide, manganese oxide, cobalt oxide, zinc oxide, strontium oxide, yttrium oxide, molybdenum oxide, zirconium oxide, lanthanum oxide, oxides of the lanthanide series of elements, and combinations of these. In the aqueous electrocoat coating, the binder comprises an electrodepositable resin having acid salted amine groups or amine salted acid groups, which electrodepositable resin includes the aromatic amine group-containing resin or is a second, different resin. The electrodeposited coating layer may be cured and may be overcoated with one or more additional coating layers.

The aromatic amine group-containing resin may be prepared using any resin or polymerizable monomer that may be adducted with the aromatic amine group. Electrocoat coating binders often include epoxy or acrylic resins, and the aromatic amine group-containing resin may, for example, be an epoxy resin, acrylic polymer, polyester, polyurethane, or a polybutadiene, polyisoprene, or other epoxy-modified rubber-based polymer.

The aromatic amine group-containing resin may be prepared by reaction of a resin having functionality reactive with a group of a compound also having an aromatic amine group. The complementary group of the compound also having an aromatic amine group may be a secondary amine. When the group of the compound is a secondary amine, the resin functionality may be chosen from epoxide groups. Alternatively, the aromatic amine group-containing resin may be prepared by reaction of a monomer having the reactive functionality with the complementary reactive group of the compound also having an aromatic amine group, then polymerizing the monomer to form the aromatic amine group-containing resin. The resin may include a plurality of aromatic amine groups.

Nonlimiting examples of suitable compounds having an aromatic amine group and a group reactive with the resin include those having a formula 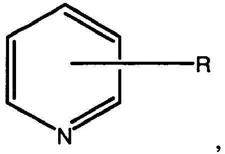 in which R is an amino group, preferably a secondary amine group, which may include from two to four carbon atoms and, optionally, other heteroatoms including oxygen or other nitrogen atoms. Among specific compounds are those in which R is methylamine, ethylamine, N-methylaminoethylene, N-ethylaminoethylene, N-propylaminoethylene, N-butylaminoethylene, N-methylaminopropylene, N-ethylaminopropylene, N-propylaminopropylene, N-butylaminopropylene, N-methylaminobutylene, N-ethylaminobutylene, N-propylaminobutylene, and N-butylaminobutylene. Specific examples of suitable compounds having an aromatic amine group and a group reactive with the resin include 3-(3-pyridyl)-1-propylamine, 4-(4-pyridyl)butylamine, 4-[2-(phenylamino)ethyl]pyridine, 4-(2-cyclopropylaminoethyl)pyridine, 2-(3-pyridyl)-1-propylamine, 4-pyridinepropanamine, 2-ethyl-3-(4-pyridylmethylamino)-1-propanol, 3-[[2-(4-pyridinyl)ethyl]amino]-1-propanol, N-1-ethyl-N-1-[2-(4-pyridinyl)ethyl]-1,3-propanediamine, N-1,2-dimethyl-N-1-[2-(4-pyridinyl)ethyl]-1,3-propanediamine, N-2-methyl-N-2-[2-(4-pyridinyl)ethyl]-1,2-propanediamine, N-1-ethyl-2-methyl-N-1-[2-(4-pyridinyl)ethyl]-1,3-propanediamine, N-2-methyl-N-2-[2-(4-pyridinyl)ethyl]-1,2-propanediamine, N-1-methyl-N-1-[2-(4-pyridinyl)ethyl]-1,4-butanediamine, N-1-methyl-N-1-[2-(4-pyridinyl)ethyl]-1,4-butanediamine, N-1-ethyl-N-1-[2-(4-pyridinyl)ethyl]-1,4-butanediamine, N-1-ethyl-N-1-[2-(4-pyridinyl)ethyl]-1,4-butanediamine, 2-(4-pyridinylmethoxy)-ethanamine, 2-(3-pyridinylmethoxy)-ethanamine, 3-(4-pyridinylmethoxy)-1-propanamine, N-methyl-3-(3-pyridinylmethoxy)-1-propanamine, N-methyl-2-(2-pyridinyloxy)-ethanamine, N-methyl-2-(2-pyridinyloxy)-ethanamine, N-(2-methoxyethyl)-4-pyridinemethanamine, 2-(2-pyridinylmethoxy)-ethanamine, 3-[2-(4-pyridinyl)ethoxy]-1-propanamine, and 3-(2-pyridyloxy)-propylamine.

Besides a pyridine group, the compound with an aromatic amine group may have a pyrazine group, a pyrimidine group, a pyridazine group, a phezine group, an isoqinoline group, a quiinoline group, a phthalazine group, a phthrydine group, a cinnoline group , a carbazole group, a purine group, an imidazole group, a triazole group, a benzimidazole group, a benzimidazolone group, a thiazole group, a benzothiazole group, a pyrazole group, a pyrazolone group, a thiadiazole group, or a combination of these with each other or with a pyridine group. Suitable compounds having such aromatic amine groups and a group reactive with the resin include aminopyrazines, aminopyrimidines, aminopyridazines, aminophenazines, aminoisoquinolines, aminoquinolines, aminophthalazines, aminonaphthrydines, aminocarbazoles, aminopurines, aminotriazoles, aminobenzimidazoles, aminobenzimidazolones, aminothiazoles, aminobenzothiazoles, aminopyrazoles, aminopyrazolones, aminothiadiazoles, aminocinnolines, aminocarbazoles, aminopurines, aminotriazoles, aminobenzimidazoles, aminobenzimidazolones, aminothiazoles, aminobenzothiazoles, aminopyrazoles aminopyrazolone, and aminothiadiazoles, particularly those in which the amine group is an N-alkylamine group or an N-alkylaminoalkylene group, for example 4-amino-2-methoxy-pyrimidine.

In a first embodiment, the aromatic amine group-containing resin is an epoxy resin. The aromatic amine group-containing epoxy resin may be prepared by first preparing an epoxy resin by reaction of a polyepoxide with an optional extender and/or optional other reactants such as monofunctional or tri- or higher-functional reactants, optionally including in this reaction step a monomer that provides carboxyl or amine functionality or reacting the product of this reaction step with a monomer that provides carboxyl or amine functionality, then reacting the product epoxy resin with a reactant providing the aromatic amine group. In a second method, the aromatic amine group-containing epoxy resin may be prepared by including the reactant providing the aromatic amine group in the step of reacting the polyepoxide with an extender or by including the reactant providing the aromatic amine group in a later step in which a polyepoxide-extender product is reacted with a monomer that provides carboxyl or amine functionality. In a third method, the aromatic amine group-containing epoxy resin may be prepared by a reaction as previously outlined but in which at least one of the polyepoxide, extender, monofunctional or trifunctional reactant, or monomer that provides carboxyl or amine functionality is a product of a reaction with the reactant providing the aromatic amine group (i.e., one of the monomers forming the epoxy resin is pre-reacted with the reactant providing the aromatic amine group).

Suitable, nonlimiting examples of polyepoxide resins include epoxy resins with a plurality of epoxide groups, such as diglycidyl aromatic compounds such as the diglycidyl ethers of polyhydric phenols such as 2,2-bis(4-hydroxyphenyl)propane (bisphenol A), 2,2-bis(4-hydroxy-3-methylphenyl)propane, 4,4'-dihydroxybenzophenone, dihydroxyacetophenones, 1,1-bis(4hydroxyphenylene)ethane, bis(4-hydroxyphenyl) methane, 1,1-bis(4hydroxyphenyl)isobutane, 2,2-bis(4-hydroxy-tert-butylphenyl) propane, 1,4-bis(2-hydroxyethyl)piperazine, 2-methyl-1,1-bis(4-hydroxyphenyl)propane, bis-(2-hydroxynaphthyl)methane, 1,5-dihydroxy-3-naphthalene, and other dihydroxynaphthylenes, catechol, resorcinol, and the like, including diglycidyl ethers of bisphenol A and bisphenol A-based resins having a structure 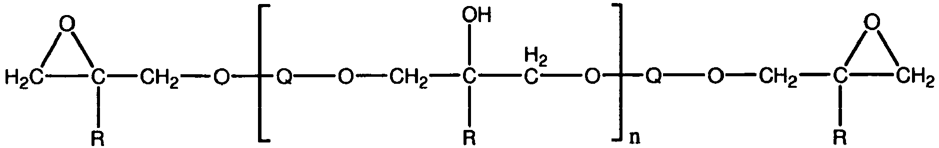 wherein Q is 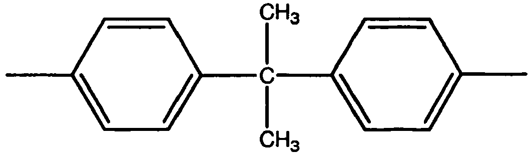 R is H, methyl, or ethyl, and n is an integer from 0 to 10. In certain embodiments, n is an integer from 1 to 5. Also suitable are the diglycidyl ethers of aliphatic diols, including the diglycidyl ethers of 1,4- butanediol, cyclohexanedimethanols, ethylene glycol, propylene glycol, diethylene glycol, dipropylene glycol, triethylene glycol, tripropylene glycol, polypropylene glycol, polyethylene glycol, poly(tetrahydrofuran), 1,3-propanediol, 2,2,4-trimethyl-1,3-pentanediol, 1,6-hexanediol, 2,2-bis(4-hydroxycyclohexyl) propane, and the like. Diglycidyl esters of dicarboxylic acids can also be used as polyepoxides. Specific examples of compounds include the diglycidyl esters of oxalic acid, cyclohexanediacetic acids, cylcohexanedicarboxylic acids, succinic acid, glutaric acid, phthalic acid, terephthalic acid, isophthalic acid, naphthalene dicarboxylic acids, and the like. A polyglycidyl reactant may be used, preferably in a minor amount in combination with diepoxide reactant. Novolac epoxies may be used as a polyepoxide-functional reactant. The novolac epoxy resin may be selected from epoxy phenol novolac resins or epoxy cresol novolac resins. Other suitable higher-functionality polyepoxides are glycidyl ethers and esters of triols and higher polyols such as the triglycidyl ethers of trimethylolpropane, trimethylolethane, 2,6-bis(hydroxymethyl)-p-cresol, and glycerol; tricarboxylic acids or polycarboxylic acids. Also useful as polyepoxides are epoxidized alkenes such as cyclohexene oxides and epoxidized fatty acids and fatty acid derivatives such as epoxidized soybean oil. Other useful polyepoxides include, without limitation, polyepoxide polymers such as acrylic, polyester, polyether, and epoxy resins and polymers, and epoxy-modified polybutadiene, polyisoprene, acrylobutadiene nitrile copolymer, or other epoxy-modified rubber-based polymers that have a plurality of epoxide groups. The polyepoxide may be provided with the aromatic amine group by reaction of a hydroxyl group with the reactant providing the aromatic amine group, for example a hydroxyl group as shown in the structure above for bisphenol A-based resins or with a hydroxyl group, from one up to all but two hydroxyl groups, of a polyol that is then etherified with epihalohydrin to form a polyglycidyl ether or all but one hydroxyl group of a polyol, which is etherified to form a monoglycidyl ether.

The polyepoxide may be provided with the aromatic amine group by reaction of an epoxide group of a polyepoxide with three or more epoxide groups with the reactant providing the aromatic amine group so that the reaction product is left with two unreacted epoxide groups. A monoepoxide may be provided with the aromatic amine group by reaction of an epoxide group of a diepoxde with the reactant providing the aromatic amine group so that the reaction product is left with one unreacted epoxide group. Such a reaction may be carried out with a reactant providing the aromatic amine group that has a secondary alliphatic amine group.

The polyepoxide (and any optional monoepoxide) may be reacted with an extender to prepare a resin having a higher molecular weight having beta-hydroxy ester linkages. Suitable, nonlimiting examples of extenders include polycarboxylic acids, polyols, polyphenols, and amines having two or more amino hydrogens, especially dicarboxylic acids, diols, diphenols, and diamines. Particular, nonlimiting examples of suitable extenders include diphenols, diols, and diacids such as those mentioned above in connection with forming the polyepoxide; polycaprolactone diols, and ethoxylated bisphenol A resins such as those available from BASF Corporation under the trademark MACOL®. Other suitable extenders include, without limitation, carboxy- or amine-functional acrylic, polyester, polyether, and epoxy resins and polymers. Still other suitable extenders include, without limitation, polyamines, including diamines such as ethylenediamine, diethylenetriamine, triethylenetetramine, dimethylaminopropylamine, dimethylaminobutylamine, diethylaminopropylamine, diethylaminobutylamine, dipropylamine, and piperizines such as 1-(2-aminoethyl)piperazine, polyalkylenepolyamines such as triethylenetetramine, tetraethylenepentamine, pentaethylenehexamine, tripropylenetetramine, tetrapropylenepentamine, pentapropylenehexamine, N,N'-bis(3-aminopropyl)ethylenediamine, N-(2-hydroxyethyl) propane-1,3-diamine, and polyoxyalkylene amines such as those available from BASF AG under the trademark POLYAMIN® or from Huntsman under the trademark JEFFAMINE®. The product of the reaction of polyepoxide and extender will be epoxide-functional when excess equivalents of polyepoxide are reacted or will have the functionality of the extender when excess equivalents of extender are used.

Among extenders including an aromatic amine group that may be used are compounds of the formula HO-(R)-Py-(R)-OH or HO-(R)-(R-Py)-(R)-OH, wherein R is an alkyl group of from 1 to 12 carbons, for example from 2 to 8 carbons, and Py is a pyridine group, such as 3,5-pyridinedipropanol, 2-[3-(3-pyridinyl)propyl]-1,3-propanediol, 3-(3-pyridinyl)-5-pentanediol, 1-(3-pyridinyl)-1,5-pentanediol, 2,6-pyridine-dibutanol, 6-methyl-2,4-pyridine-dibutanol, 3-(2-methyl-4-pyridinyl)-1,5-hexanediol, and 1-(3-pyridinyl)-1,4-butanediol; compounds of the formula HO-(R)-Py-(R)-COOH or HO-(R)-(R-Py)-(R)-COOH, wherein R and Py are as previously defined, such as d-hydroxy-3-pyridinepentanoic acid; and compounds of the formula HOOC-(R)-Py-(R)-COOH or HOOC-(R)-(R-Py)-(R)-COOH, wherein R and Py are as previously defined, such as 3,5-pyridinedibutanoic acid, 6-(2-carboxyethyl)-3-pyridinebutanoic acid, 3-(3-pyridinyl)-nonanedioic acid. and d-hydroxy-3-pyridinepentanoic acid.

A monofunctional reactant may optionally be reacted with the polyepoxide resin and the extender or after reaction of the polyepoxide with the extender to prepare the epoxy resin. Suitable, nonlimiting examples of monofunctional reactants include phenol, alkylphenols such as nonylphenol and dodecylphenol, other monofunctional, epoxide-reactive compounds such as dimethylethanolamine and monoepoxides such as the glycidyl ether of phenol, the glycidyl ether of nonylphenol, or the glycidyl ether of cresol, and dimer fatty acid.

Useful catalysts for the reaction of the polyepoxide resin with the extender and optional monofunctional reactant and for the reaction of an epoxide group of the resin with an aliphatic amine group of a compound with an aromatic amine group include any that activate an oxirane ring, such as tertiary amines or quaternary ammonium salts (e.g., benzyldimethylamine, dimethylaminocyclohexane, triethylamine, N-methylimidazole, tetramethyl ammonium bromide, and tetrabutyl ammonium hydroxide.), tin and/or phosphorous complex salts (e.g., (CH₃)₃ SNI, (CH₃)₄ PI, triphenylphosphine, ethyltriphenyl phosphonium iodide, tetrabutyl phosphonium iodide) and so on. It is known in the art that tertiary amine catalysts may be preferred with some reactants. The reaction may be carried out at a temperature of from about 100°C. to about 350°C. (in other embodiments 160°C to 250°C.) in solvent or neat. Suitable solvents include, without limitation, inert organic solvent such as a ketone, including methyl isobutyl ketone and methyl amyl ketone, aromatic solvents such as toluene, xylene, Aromatic 100, and Aromatic 150, and esters, such as butyl acetate, n-propyl acetate, hexyl acetate.

The epoxy resin may be reacted with the reactant providing the aromatic amine group during, or after reaction of the polyepoxide resin with the extender and optional monofunctional reactant. The epoxy resin may be reacted with an aliphatic amine group of a reactant providing the aromatic amine group and optionally a monofunctional reactant such as those already described and not be reacted with an extender.

An amine-functional or carboxyl-functional epoxy resin has at least one amine or carboxyl group, and this amine or carboxyl functionality may introduced during or after reaction of the polyepoxide with the extender. For a cathodically electrodepositing system, amine functionality is provided from the compound having an aromatic amine group. The carboxyl functionality for an anodically electrodepositable resin, or additional amine functionality for a cathodically electrodepositable resin, may be introduced by reaction of the polyepoxide resin with an extender having a tertiary amine or having carboxyl groups (where not all are reacted with epoxide groups, i.e., carboxyl equivalents are in excess relative to epoxide equivalents) or with a monofunctional reactant having a tertiary amine group. The amine or carboxyl functionality may be introduced after reaction of the polyepoxide and extender when the product is epoxide-functional by reaction of the epoxide-functional product with a reactant having a tertiary amine or with an excess of reactant having a plurality of carboxyl groups Suitable, nonlimiting examples of extenders and monofunctional reactants having an amine group that may be used in addition to the compound having an aromatic amine group include diethanolamine, dipropanolamine, diisopropanolamine, dibutanolamine, diisobutanolamine, diglycolamine, methylethanolamine, dimethylaminopropylamine, diethylaminopropylamine, dimethylaminoethylamine, N-aminoethylpiperazine, aminopropylmorpholine, tetramethyldipropylenetriamine, methylamine, ethylamine, dimethylamine, dibutylamine, ethylenediamine, diethylenetriamine, triethylenetetramine, dimethylaminobutylamine, diethylaminopropylamine, diethylaminobutylamine, dipropylamine, methylbutylamine, methylethanolamine, aminoethylethanolamine, aminopropylmonomethylethanolamine, polyoxyalkylene amines. and compounds having a primary amine group that has been protected by forming a ketimine, such as a reaction product of 1 mole diethylenetriamine and 2 moles methyl isobutyl ketone. Suitable, nonlimiting examples of extenders and monofunctional reactants having a carboxyl group include compounds of the formula HO-(R)-COOH or an amine salt of the formula HO-(R)-COOH+NR3, wherein R is an alkyl group of from 1 to 12 carbons, preferable from 2 to 8 carbons. Polyacids such as malic acid and citric acid may also be used. Preferred organic free acids are lactic acid, glycolic acid and stearic acid. Hydroxy stearic acids are most preferred. The epoxy resin with its amine functionality may cathodically electrodeposited; if the epoxy resin has carboxyl functionality, it is anodically electrodepositable. The aromatic amine functional epoxy resin may also be combined in the electrocoat coating composition binder with a second resin that is cathodically or anodically electrodepositable.

In a first particular embodiment, bisphenol A, the diglycidyl ether of bisphenol A, and phenol are reacted in a first step to form a epoxide functional extended resin; the epoxide functional extended resin, diethanolamine, dimethylaminopropylamine and N-methylaminoethylenepyridine are reacted in a second step to form an amine-functional, aromatic amine containing epoxy resin. The aromatic amine containing epoxy resin is combined with desired other components and the amine functionality is at least partially neutralized with an acid, then dispersed in an aqueous medium.

In a second embodiment, the aromatic amine group-containing resin is a vinyl polymer, such as an acrylic polymer. The aromatic amine group-containing acrylic polymer may be prepared by polymerization of a comonomer having an aromatic amine group or by reaction of an acrylic polymer having a reactive functionality with a complementary reactant providing the aromatic amine group. Nonlimiting examples of monomers that may be reacted with the reactant providing the aromatic amine group before polymerization or that may be polymerized to provide a group to be reacted with the reactant providing the aromatic amine group after polymerization include addition polymerizable monomers having epoxide groups, wherein the complementary reactant providing the aromatic amine group has a secondary amine group. Specific, nonlimiting examples include epoxide-functional ethylenically unsaturated monomers such as glycidyl acrylate, glycidyl methacryale, and allyl glycidyl ether;

Vinyl or acrylic resins may be made cathodically electrodepositable by incorporation of an amine-containing monomer, such as acrylamide, methacrylamide, N,N'-dimethylaminoethyl methacrylate tert-butylaminoethyl methacrylate. 2-vinylpyridine, 4-vinylpyridine, or vinylpyrrolidine, or may be made anodically electrodepositable by incorporation of a carboxyl-containing monomer, such as acrylic acid, methacrylic acid, crotonic acid, maleic anhydride or acid, fumaric acid, isocrotonic acid, vinylacetic acid, and itaconic acid or anhydride, or monoesters of dicarboxylic acids such as monomethyl maleate, monobutyl maleate, and monopropyl itaconate. Alternatively, epoxide groups may be incorporated by including an epoxide-functional monomer such as glycidyl acrylate, glycidyl methacrylate, or allyl glycidyl ether in the polymerization reaction, then be made cathodically electrodepositable by reaction of the epoxide groups with amines according to the methods previously described for the epoxy resins.

A monomer that will provide functionality for crosslinking, in other words a monomer having a group reactive with a crosslinker in the binder, is generally copolymerized in forming the vinyl or acrylic polymer. Among suitable monomers are monomers having an active hydrogen group such as hydroxyalkyl acrylates and hydroxyalkyl methacrylates. Also useful for providing crosslinking groups are the acid-, amine-, or epoxide-functional monomers already mentioned.

The monomer bearing the aromatic amine group or group reactive with the reactant providing the aromatic amine group (e.g., hydroxyl group) and the optional monomer bearing the group for electrodeposition (amine for a cationic group or acid or anhydride for anionic group) and/or monomer being a group for crosslinking the coating may be polymerized with one or more other ethylenically unsaturated monomers. Such monomers for copolymerization are known in the art. Illustrative examples include, without limitation, alkyl esters of acrylic or methacrylic acid, e.g., methyl methacrylate, ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, t-butyl acrylate, t-butyl methacrylate, amyl acrylate, amyl methacrylate, isoamyl acrylate, isoamyl methacrylate, hexyl acrylate, hexyl methacrylate, 2-ethylhexyl acrylate, decyl acrylate, decyl methacrylate, isodecyl acrylate, isodecyl methacrylate, dodecyl acrylate, dodecyl methacrylate, cyclohexyl acrylate, cyclohexyl methacrylate, substituted cyclohexyl acrylates and methacrylates, 3,5,5-trimethylhexyl acrylate, 3,5,5-trimethylhexyl methacrylate, diesters of maleic, fumaric, crotonic, isocrotonic, vinylacetic, and itaconic acids, and the like; and vinyl monomers such as styrene, t-butyl styrene, alpha-methyl styrene, vinyl toluene and the like. Other useful polymerizable co-monomers include, for example, alkoxyethyl acrylates and methacrylates, acryloxy acrylates and methacrylates, and compounds such as acrylonitrile, methacrylonitrile, acrolein, and methacrolein. Combinations of these are usually employed.

The aromatic amine group-containing resin is used to prepare an electrocoat coating composition (also known as an electrocoat bath). In general, a binder is prepared comprising the aromatic amine group-containing resin, then the binder is dispersed in an aqueous medium by salting ionizable groups present in the binder. When the aromatic amine group-containing resin is not electrodepositable by itself or has too few amine groups to form a stable dispersion, then a second, electrodepositable resin is included in the binder; the second, electrodepositable resin may be included in the binder even when the aromatic amine group-containing resin is electrodepositable. Generally, it is desirable to crosslink the electrodeposited coating to a cured coating layer, and a crosslinker (also called curing agent or crosslinking agent) is generally included in the binder for this purpose. The crosslinker may react under curing conditions with the aromatic amine group-containing resin, the optional second, electrodepositable resin, and/or an optional further resin included in the coating composition binder.

The electrocoat bath) may also include a metal oxide selected from the group consisting of bismuth oxide, vanadium oxide, manganese oxide, cobalt oxide, zinc oxide, strontium oxide, yttrium oxide, molybdenum oxide, zirconium oxide, lanthanum oxide, oxides of the lanthanide series of elements, and combinations of these. The metal oxide may be predispersed in the binder before or after the resin is salted and water is added, or the metal oxide may be incorporated into the electrocoat coating composition using another dispersing resin, as described in more detail below.

A second, electrodepositable resin may be an epoxy resin, acrylic polymer, polyurethane, or a epoxy-modified polybutadiene, epoxy-modified polyisoprene, or other epoxy-modified rubber-based polymer, in which the resin has amine functionality (to be cathodically electrodepositable) or carboxyl functionality (to be anodically electrodepositable). Such epoxy and acrylic resins may be prepared according to the methods outlined above regarding preparation of the aromatic amine group-containing resin, without adducting the resin with the compound having an aromatic amine group or including the aromatic amine group-containing monomers in polymerization. Further details of preparation of all of these resins are readily available in the art, particularly in existing patent documents. Cationic polyurethanes and polyesters may also be used. Such materials may be prepared by endcapping with, for example, an aminoalcohol or, in the case of the polyurethane, the same compound comprising a saltable amine group previously described may also be useful. Polybutadiene, polyisoprene, or other epoxy-modified rubber-based polymers can be used as the resin in the present invention. The epoxy-rubber can be capped with a compound comprising a saltable amine group.

In certain embodiments, the aromatic amine group-containing resin is electrodepositable and is present in an amount from about 0.01 to about 99% by weight of binder in the electrodeposition coating composition. The electrodepositable aromatic amine group-containing resin may be present in an amount from about 1 to about 90% by weight of binder or from about 5 to about 80% by weight of binder in the electrodeposition coating composition. In anodic electrocoat embodiments, when the aromatic amine group-containing resin is not electrodepositable a second, electrodepositable resin is present in an amount from about 40 to about 80% by weight of binder, from about 45 to about 75% by weight of binder, or from about 50 to about70% by weight of binder in the electrodeposition coating composition and the aromatic amine group-containing resin is present in an amount from about 0.01 to about 30% by weight of binder, from about 1 to about 30% by weight of binder, or from about5 to about 20% by weight of binder in the electrodeposition coating composition.

A crosslinker is selected according to groups available on the resin or resins of the binder for crosslinking during curing of a coating layer formed on a substrate. The art describes many considerations in selecting crosslinkers. Crosslinkers that reactive with active hydrogen groups on the resin or resin(s) are most commonly used, and of these polyisocyanates (particularly blocked polyisocyanates) and aminoplasts may be mentioned in particular. Nonlimiting examples of aromatic, aliphatic or cycloaliphatic polyisocyanates include diphenylmethane-4,4'-diisocyanate (MDI), 2,4- or 2,6-toluene diisocyanate (TDI), p-phenylene diisocyanate, tetramethylene diisocyanate, hexamethylene diisocyanate, dicyclohexylmethane-4,4'-diisocyanate, isophorone diisocyanate, mixtures of phenylmethane-4,4'-diisocyanate, polymethylene polyphenylisocyanate, , 2-isocyanatopropylcyclohexyl isocyanate, dicyclohexylmethane 2,4'-diisocyanate, 1,3-bis(iso-cyanatomethyl)cyclohexane, diisocyanates derived from dimer fatty acids, as sold under the commercial designation DDI 1410 by Henkel, 1,8-diisocyanato-4-isocyanatomethyloctane, 1,7-diisocyanato-4-isocyanato-methylheptane or 1-isocyanato-2-(3-isocyanatopropyl)-cyclohexane, and higher polyisocyanates such as triphenylmethane-4,4',4"-triisocyanate, or mixtures of these polyisocyanates. Suitable polyisocyantes also include polyisocyanates derived from these that containing isocyanurate, biuret, allophanate, iminooxadiazinedione, urethane, urea, or uretdione groups. Polyisocyanates containing urethane groups, for example, are obtained by reacting some of the isocyanate groups with polyols, such as trimethylolpropane, neopentyl glycol, and glycerol, for example. The isocyanate groups are reacted with a blocking agent. Examples of suitable blocking agents include phenol, cresol, xylenol, epsilon-caprolactam, delta-valerolactam, gamma-butyrolactam, diethyl malonate, dimethyl malonate, ethyl acetoacetate, methyl acetoacetate, alcohols such as methanol, ethanol, isopropanol, propanol, isobutanol, tert-butanol, butanol, glycol monoethers such as ethylene or propylene glycol monoethers, acid amides (e.g. acetoanilide), imides (e.g. succinimide), amines (e.g. diphenylamine), imidazole, urea, ethylene urea, 2-oxazolidone, ethylene imine, oximes (e.g. methylethyl ketoxime), and the like.

As understood by those skilled in the art, an aminoplast resin is formed by the reaction product of formaldehyde and amine where the preferred amine is a urea or a melamine. Although urea and melamine are the preferred amines, other amines such as triazines, triazoles, diazines, guanidines, or guanamines may also be used to prepare the aminoplast resins. Furthermore, although formaldehyde is preferred for forming the aminoplast resin, other aldehydes, such as acetaldehyde, crotonaldehyde, and benzaldehyde, may also be used. Nonlimiting examples of suitable aminoplast resins include monomeric or polymeric melamine-formaldehyde resins, including melamine resins that are partially or fully alkylated using alcohols that preferably have one to six, more preferably one to four, carbon atoms, such as hexamethoxy methylated melamine; urea-formaldehyde resins including methylol ureas and siloxy ureas such as butylated urea formaldehyde resin, alkylated benzoguanimines, guanyl ureas, guanidines, biguanidines, polyguanidines, and the like.

The binder may include one or more additional resins. Nonlimiting examples of suitable additional resins include epoxy resins, polyesters, polyurethanes, vinyl resins such as acrylic polymers, and polybutadiene resins. The additional resin may be, for example, any of the polyepoxide resins, extended polyepoxide resins, or epoxide-functional resins already mentioned, optionally reacted with a compound having at least one epoxide-reactive group.

Optionally, plasticizer or solvents or both can be included in the elecrocoat coating composition. Nonlimiting examples of coalescing solvents include alcohols, glycol ethers, polyols, and ketones. Specific coalescing solvents include monobutyl and monohexyl ethers of ethylene glycol, phenyl ether of propylene glycol, monoalkyl ethers of ethylene glycol such as the monomethyl, monoethyl, monopropyl, and monobutyl ethers of ethylene glycol or propylene glycol; dialkyl ethers of ethylene glycol or propylene glycol such as ethylene glycol dimethyl ether and propylene glycol dimethyl ether; butyl carbitol; diacetone alcohol. Nonlimiting examples of plasticizers include ethylene or propylene oxide adducts of nonyl phenols, bisphenol A, cresol, or other such materials, or polyglycols based on ethylene oxide and/or propylene oxide. The amount of coalescing solvent is not critical and is generally between about 0 to 15 percent by weight, preferably about 0.5 to 5 percent by weight based on total weight of the resin solids. Plasticizers can be used at levels of up to 15 percent by weight resin solids.

The binder is emulsified in water in the presence of a salting acid or base. Nonlimiting examples of suitable acids include phosphoric acid, phosphonic acid, propionic acid, formic acid, acetic acid, lactic acid, or citric acid. Nonlimiting examples of suitable bases include Lewis and Brönstead bases including amines and hydroxide compounds such as potassium hydroxide and sodium hydroxide. Illustrative amines include N,N-dimethylethylamine (DMEA), N,N-diethylmethylamine, triethylamine, triethanolamine, triisopropylamine, dimethylethanolamine, diethylethanolamine, diisopropylethanolamine, dibuthylethanolamine, methyldiethanolamine, dimethylisopropanolamine, methyldiisopropanolamine, dimethilethanolamine, and the like. In certain preferred embodiments the amines are tertiary amines such as dimethylethylamine and dimethylethanolamine. The salting acid or base may be blended with the binder, mixed with the water, or both, before the binder is added to the water. The acid or base is used in an amount sufficient to neutralize enough of the ionizable resin groups to impart water-dispersibility to the binder. The ionizable groups may be fully neutralized; however, partial neutralization is usually sufficient to impart the required water-dispersibility. By saying that the resin is at least partially neutralized, we mean that at least one of the saltable groups of the binder is neutralized, and up to all of such groups may be neutralized. The degree of neutralization that is required to afford the requisite water-dispersibility for a particular binder will depend upon its composition, molecular weight of the resins, weight percent of amine-functional resin, and other such factors and can readily be determined by one of ordinary skill in the art through straightforward experimentation.

The binder emulsion is then used in preparing an electrocoat coating composition (or bath). The electrocoat bath may contain no pigment so as to produce a colorless or clear electrodeposited coating layer, but the electrocoat bath usually includes one or more pigments, separately added as part of a pigment paste, and may contain any further desired materials such as coalescing aids, antifoaming aids, and other additives that may be added before or after emulsifying the resin. The electrocoat bath may include a metal oxide selected from the group consisting of bismuth oxide, vanadium oxide, manganese oxide, cobalt oxide, zinc oxide, strontium oxide, yttrium oxide, molybdenum oxide, zirconium oxide, lanthanum oxide, and oxides of the lanthanide series of elements. Conventional pigments for electrocoat primers include titanium dioxide, ferric oxide, carbon black, aluminum silicate, precipitated barium sulfate, aluminum phosphomolybdate, strontium chromate, basic lead silicate or lead chromate. The metal oxide is selected from the group consisting of bismuth oxide, anadium oxide, manganese oxide, cobalt oxide, zinc oxide, strontium oxide, yttrium oxide, molybdenum oxide, zirconium oxide, lanthanum oxide, and oxides of the lanthanide series of elements. The metal oxide may of any available oxidation state of these metals. In various embodiments, the metal oxide comprises Bi₂O₃, ZnO, Co₃O₄, CoO, Co₂O₃, MnO₂, MnO, Mn₃O₄, Mn₂O₃, Mn₂O₇, MoO₂, SrO, V₂O₅, VO, VO₂, Y₂O₃, ZrO₂, La₂O₃, Ce₂O₃, Pr₆O₁₁, Nd₂,O₃, Pm₂O₃, Sm₂O₃, Eu₂O₃, Gd₂O₃, Tb₂O₃, Tb₄O₇, Dy₂O₃, Ho₂O₃, Er₂O₃, Tm₂O₃, Yb₂O₃, Lu₂O₃, and combinations of these. In various embodiments, the metal oxide may be included in amounts of from about 0.01 to about 1 percent by weight, based on total binder solids weight. The metal oxide and optional additional pigments and/or fillers may be predispersed in a resin before or after the resin is salted and water is added, or the metal oxide and any optional additional pigment may be separately added as part of a pigment paste. The pigment-to-resin weight ratio in the electrocoat bath can be important and should be preferably less than 50:100, more preferably less than 40:100, and usually about 10 to 30:100. Higher pigment-to-resin solids weight ratios have been found to adversely affect coalescence and flow. Usually, the pigment is 10-40 percent by weight of the nonvolatile material in the bath. Preferably, the pigment is 15 to 30 percent by weight of the nonvolatile material in the bath. Any of the pigments and fillers generally used in electrocoat primers may be included. Inorganic extenders such as clay and anti-corrosion pigments are commonly included.

The electrodeposition coating compositions can contain optional ingredients such as dyes, flow control agents, plasticizers, catalysts, wetting agents, surfactants, UV absorbers, HALS compounds, antioxidants, defoamers and so forth. Examples of surfactants and wetting agents include alkyl imidazolines such as those available from Ciba-Geigy Industrial Chemicals as AMINE C® acetylenic alcohols such as those available from Air Products and Chemicals under the tradename SURFYNOL®. Surfactants and wetting agents, when present, typically amount to up to 2 percent by weight resin solids.

Curing catalysts such as tin catalysts can be used in the coating composition. Typical examples are without limitation, tin and bismuth compounds including dibutyltin dilaurate, dibutyltin oxide, and bismuth octoate. When used, catalysts are typically present in amounts of about 0.05 to 2 percent by weight tin based on weight of total resin solids.

The electrocoat coating composition is electrodeposited onto a metallic substrate. The substrate may be, as some nonlimiting examples, cold-rolled steel, galvanized (zinc coated) steel, electrogalvanized steel, stainless steel, pickled steel, GALVANNEAL® GALVALUME®, and GALVAN® zinc-aluminum alloys coated upon steel, and combinations of these. Nonlimiting examples of useful non-ferrous metals include aluminum, zinc, magnesium and alloys of these. The electrodeposition of the coating preparations according to the invention may be carried out by known processes. The electrodeposition coating composition may be applied preferably to a dry film thickness of 10 to 35 µm. In one embodiment of the method, the electrically conductive substrate is unphosphated; that is, it is free of a phosphate pre-treatment The article coated with the composition of the invention may be a metallic automotive part or body. A method of coating an electrically conductive substrate, such as a metal automotive vehicle body or part, comprises placing an electrically conductive substrate, cleaned but preferably not given a phosphate pre-treatment, into the electrocoat coating composition and, using the electrically conductive substrate as the cathode, passing a current through the electrocoat coating composition causing a coating layer to deposit onto the electrically conductive substrate. After application, the coated article is removed from the bath and rinsed with deionized water. The coating may be cured under appropriate conditions, for example by baking at from about 275° F to about 375° F for between about 15 and about 60 minutes, before applying an additional coating layer over the electrodeposited coating layer.

An automotive vehicle body may be electrocoated. The automotive vehicle body is cleaned, and the cleaned metal automotive vehicle body is electrocoated with an aqueous electrodeposition coating composition comprising the metal oxide and the phosphorylated resin.

One or more additional coating layers, such as a spray-applied primer-surfacer, single topcoat layer, or composite color coat (basecoat) and clearcoat layer, may be applied over the electrocoat layer. A single layer topcoat is also referred to as a topcoat enamel. In the automotive industry, the topcoat is typically a basecoat that is overcoated with a clearcoat layer. A primer surfacer and the topcoat enamel or basecoat and clearcoat composite topcoat may be waterborne, solventborne, or a powder coating, which may be a dry powder or an aqueous powder slurry.

The composite coating of the invention may have, as one layer, a primer coating layer, which may also be termed a primer-surfacer or filler coating layer. The primer coating layer can be formed from a solventborne composition, waterborne composition, or powder composition, including powder slurry composition. The primer composition preferably has a binder that is thermosetting, although thermoplastic binders are also known. Suitable thermosetting binders may have self-crosslinking polymers or resins, or may include a crosslinker reactive with a polymer or resin in the binder. Nonlimiting examples of suitable binder polymers or resins include acrylics, polyesters, and polyurethanes. Such polymers or resins may include as functional groups hydroxyl groups, carboxyl groups, anhydride groups, epoxide groups, carbamate groups, amine groups, and so on. Among suitable crosslinkers reactive with such groups are aminoplast resins (which are reactive with hydroxyl, carboxyl, carbamate, and amine groups), polyisocyanates, including blocked polyisocyanates (which are reactive with hydroxyl group and amine groups), polyepoxides (which are reactive with carboxyl, anhydride, hydroxyl, and amine groups), and polyacids and polyamines (which are reactive with epoxide groups). Examples of suitable primer compositions are disclosed, for example, in U.S. Patents No. 7,338,989; 7,297,742; 6,916,877; 6,887,526; 6,727,316; 6,437,036; 6,413,642; 6,210,758; 6,099,899; 5,888,655; 5,866,259; 5,552,487; 5,536,785; 4,882,003; and 4,190,569, each assigned to BASF and each incorporated herein by reference.

The primer coating composition applied over the electrocoat primer may then be cured to form a primer coating layer. The electrocoat primer may be cured at the same time as the primer coating layer in a process known as "wet-on-wet" coating.

A topcoat composition may be applied over the electrocoat layer or primer coating layer and, preferably, cured to form a topcoat layer. In a preferred embodiment, the electrocoat layer or primer layer is coated with a topcoat applied as a color-plus-clear (basecoat-clearcoat) topcoat. In a basecoat-clearcoat topcoat, an underlayer of a pigmented coating, the basecoat, is covered with an outer layer of a transparent coating, the clearcoat. Basecoat-clearcoat topcoats provide an attractive smooth and glossy finish and generally improved performance.

Crosslinking compositions are preferred as the topcoat layer or layers. Coatings of this type are well-known in the art and include waterborne compositions, solventborne compositions, and powder and powder slurry compositions. Polymers known in the art to be useful in basecoat and clearcoat compositions include, without limitation, acrylics, vinyls, polyurethanes, polycarbonates, polyesters, alkyds, and polysiloxanes. Acrylics and polyurethanes are among preferred polymers for topcoat binders. Thermoset basecoat and clearcoat compositions are also preferred, and, to that end, preferred polymers comprise one or more kinds of crosslinkable functional groups, such as carbamate, hydroxy, isocyanate, amine, epoxy, acrylate, vinyl, silane, acetoacetate, and so on. The polymer may be self-crosslinking, or, preferably, the composition may include a crosslinking agent such as a polyisocyanate or an aminoplast resin. Examples of suitable topcoat compositions are disclosed, for example, in U.S. Patents No 7,375,174; 7,342,071; 7,297,749; 7,261,926; 7,226,971; 7,160,973; 7,151,133; 7,060,357; 7,045,588; 7,041,729; 6,995,208; 6,927,271; 6,914,096; 6,900,270; 6,818,303; 6,812,300; 6,780,909; 6,737,468; 6,652,919; 6,583,212; 6,462,144; 6,337,139; 6,165,618; 6,129,989; 6,001,424; 5,981,080;5,855,964; 5,629,374; 5,601,879; 5,508,349; 5,502,101; 5,494,970; 5,281,443; and, each assigned to BASF and each incorporated herein by reference.

The further coating layers can be applied to the electrocoat coating layer according to any of a number of techniques well-known in the art. These include, for example, spray coating, dip coating, roll coating, curtain coating, and the like. For automotive applications, the further coating layer or layers are preferably applied by spray coating, particularly electrostatic spray methods. Coating layers of one mil or more are usually applied in two or more coats (passes), separated by a time sufficient to allow some of the solvent or aqueous medium to evaporate, or "flash," from the applied layer. The flash may be at ambient or elevated temperatures, for example, the flash may use radiant heat. The coats as applied can be from 0.5 mil up to 3 mils dry, and a sufficient number of coats are applied to yield the desired final coating thickness.

A primer layer may be cured before the topcoat is applied. The cured primer layer may be from about 0.5 mil to about 2 mils thick, preferably from about 0.8 mils to about 1.2 mils thick.

Color-plus-clear topcoats are usually applied wet-on-wet. The compositions are applied in coats separated by a flash, as described above, with a flash also between the last coat of the color composition and the first coat the clear. The two coating layers are then cured simultaneously. Preferably, the cured basecoat layer is 0.5 to 1.5 mils thick, and the cured clear coat layer is 1 to 3 mils, more preferably 1.6 to 2.2 mils, thick.

Alternatively the primer layer and the topcoat can be applied "wet-on-wet." For example, the primer composition can be applied, then the applied layer flashed; then the topcoat can be applied and flashed; then the primer and the topcoat can be cured at the same time. Again, the topcoat can include a basecoat layer and a clearcoat layer applied wet-on-wet. The primer layer can also be applied to an uncured electrocoat coating layer, and all layers cured together.

The coating compositions described are preferably cured with heat. Curing temperatures are preferably from about 70°C to about 180°C, and particularly preferably from about 170°F to about 200°F for a topcoat or primer composition including an unblocked acid catalyst, or from about 240°F to about 275°F for a topcoat or primer composition including a blocked acid catalyst. Typical curing times at these temperatures range from 15 to 60 minutes, and preferably the temperature is chosen to allow a cure time of from about 15 to about 30 minutes. In a preferred embodiment, the coated article is an automotive body or part.

The invention is further described in the following example. The example is merely illustrative and does not in any way limit the scope of the invention as described and claimed. All parts are parts by weight unless otherwise noted.

### EXAMPLES

### Preparation A: Preparation of Binder Emulsion with 4-(Ethylaminomethyl)pyridine

The following materials are combined in a 3-L flask equipped with stirring and a heating mantle: diglycidyl ether of bisphenol A (18.03 parts), bisphenol A (4.1 parts), phenol (1.41 parts), and propylene glycol n-butyl ether (0.36 parts).

While stirring, the temperature is raised to 257 °F (125 °C). Subsequently, triphenylphosphine (0.04 parts) is added and the exotherm is recorded as 361.4 °F (183 °C). The mixture is then allowed to cool to 275 °F (135 °C), and a weight per epoxide (WPE) determination (target = 525 +/- 25) is conducted and is 526. After cooling to 194 °F (90 °C) and turning off the heating mantle, 2.36 parts of PLURACOL® 710R (sold by BASF Corporation) are added, then 1.73 parts of diethanolamine are introduced and the exotherm is recorded as 222.8 °F (106 °C). The reaction mixture is allowed to stir for an additional 30 minutes at 221 °F (105 °C) after reaching exotherm. The remaining unreacted epoxy groups are reacted with 3-dimethylaminopropylamine (0.42 parts) and 4-(ethylaminomethyl)pyridine (0.42 parts) at 221 °F (105 °C). The secondary amine addition results in an exotherm recorded as 258.8 °F (126 °C). The mixture is stirred for an additional hour at 248 °F (120 °C). A crosslinker (a blocked isocyanate based on polymeric MDI and monofunctional alcohols) (13.6 parts) is added. The mixture is stirred for 30 minutes at 221-230 °F (105-110 °C).

After achieving a homogeneous mixture, the resin and crosslinker blend is added to an acid/water mixture, under constant stirring, of deionized water (34.95 parts) and formic acid (88%) (0.62 parts). After thoroughly mixing all components using a metal spatula, the solids are further reduced by addition of water (18.55 parts). A flow-additive package (2.51 parts) is added to the acid mixture.

### Preparation B: Grinding Resin Having Tertiary Ammonium Groups

In accordance with EP 0 505 445 B1, an aqueous-organic grinding resin solution is prepared by reacting, in the first stage, 2598 parts of bisphenol A diglycidyl ether (epoxy equivalent weight (EEW) 188 g/eq), 787 parts of bisphenol A, 603 parts of dodecylphenol, and 206 parts of butyl glycol in a stainless steel reaction vessel in the presence of 4 parts of triphenylphosphine at 130 °C until an EEW of 865 g/eq is reached. In the course of cooling, the batch is diluted with 849 parts of butyl glycol and 1534 parts of D.E.R® 732 (polypropylene glycol diglycidyl ether, DOW Chemical, USA) and is reacted further at 90 °C with 266 parts of 2,2'aminoethoxyethanol and 212 parts of N,N-dimethylaminopropylamine. After two hours, the viscosity of the resin solution is constant (5.3 dPas; 40% in SOLVENON® PM (methoxypropanol), available from BASF AG, Germany; cone and plate viscometer at 23 °C). It is diluted with 1512 parts of butyl glycol and the base groups are partly neutralized with 201 parts of glacial acetic acid, and the product is diluted further with 1228 parts of deionized water and discharged. This gives a 60% strength aqueous-organic resin solution whose 10% dilution has a pH of 6.0. The resin solution is used in direct form for paste preparation.

### Preparation C: Pigment Paste With Zirconium Oxide

A premix is first formed from 125 parts of water and 594 parts of the grinding resin of Preparation B. Then 7 parts of acetic acid, 9 parts of TETRONIC® 901, 8 parts of carbon black, 26 parts of zirconium oxide, 547 parts of titanium dioxide TI-PURE® R 900 (DuPont, USA), 44 parts of di-n-butyl tin oxide, 47 parts of bismuth subsalicylate, and 120 parts of ASP200 clay (Langer & Co./Germany) are added. The mixture is predispersed for 30 minutes under a high-speed dissolver stirrer. The mixture is subsequently dispersed in a small laboratory mill (Motor Mini Mill, Eiger Engineering Ltd, Great Britain) until it measures a Hegmann fineness of less than or equal to 12 µm and is adjusted to solids content with additional water. The obtained pigment paste has solids content: 69.43% by weight (1 hour at 110 °C).

### Preparation D: Pigment Paste With Zinc Oxide

A premix is first formed from 125 parts of water and 594 parts of the grinding resin of Preparation B. Then 7 parts of acetic acid, 9 parts of TETRONIC® 901, 8 parts of carbon black, 17 parts of zinc oxide, 547 parts of titanium dioxide TI-PURE@ R 900 (DuPont, USA), 44 parts of di-n-butyl tin oxide, 47 parts of bismuth subsalicylate, and 120 parts of ASP200 clay (Langer & Co./Germany) are added. The mixture is predispersed for 30 minutes under a high-speed dissolver stirrer. The mixture is subsequently dispersed in a small laboratory mill (Motor Mini Mill, Eiger Engineering Ltd, Great Britain) until it measures a Hegmann fineness of less than or equal to 12 µm and is adjusted to solids content with additional water. The obtained pigment paste has solids content: 69.43% by weight (1 hour at 110 °C).

### Preparation E: Pigment Paste With Vanadium Oxide

A premix is first formed from 125 parts of water and 594 parts of the grinding resin of Preparation B. Then 7 parts of acetic acid, 9 parts of TETRONIC®, 8 parts of carbon black, 19 parts of vanadium oxide, 547 parts of titanium dioxide TI-PURE@ R 900 (DuPont, USA), 44 parts of di-n-butyl tin oxide, 47 parts of bismuth subsalicylate, and 120 parts of ASP200 clay (Langer & Co./Germany) are added. The mixture is predispersed for 30 minutes under a high-speed dissolver stirrer. The mixture is subsequently dispersed in a small laboratory mill (Motor Mini Mill, Eiger Engineering Ltd, Great Britain) until it measures a Hegmann fineness of less than or equal to 12 µm and is adjusted to solids content with additional water. The obtained pigment paste has solids content: 69.43% by weight (1 hour at 110 °C).

### Preparation F: Pigment Paste With Yttrium Oxide

A premix is first formed from 125 parts of water and 594 parts of the grinding resin of Preparation B. Then 7 parts of acetic acid, 9 parts of TETRONIC® 901, 8 parts of carbon black, 23 parts of yttrium oxide, 547 parts of titanium dioxide TI-PURE@ R 900 (DuPont, USA), 44 parts of di-n-butyl tin oxide, 47 parts of bismuth subsalicylate, and 120 parts of ASP200 clay are added. The mixture is predispersed for 30 minutes under a high-speed dissolver stirrer. The mixture is subsequently dispersed in a small laboratory mill (Motor Mini Mill, Eiger Engineering Ltd, Great Britain) until it measures a Hegmann fineness of less than or equal to 12 µm and is adjusted to solids content with additional water. The obtained pigment paste has solids content: 69.43% by weight (1 hour at 110 °C).

### Preparation G: Pigment Paste With Cobalt Oxide

A premix is first formed from 125 parts of water and 594 parts of the grinding resin of Preparation B. Then 7 parts of acetic acid, 9 parts of TETRONIC® 901, 8 parts of carbon black, 17 parts of cobalt oxide, 547 parts of titanium dioxide TI-PURE@ R 900 (DuPont, USA), 44 parts of di-n-butyl tin oxide, 47 parts of bismuth subsalicylate, and 120 parts of ASP200 clay are added. The mixture is predispersed for 30 minutes under a high-speed dissolver stirrer. The mixture is subsequently dispersed in a small laboratory mill (Motor Mini Mill, Eiger Engineering Ltd, Great Britain) until it measures a Hegmann fineness of less than or equal to 12 µm and is adjusted to solids content with additional water. The obtained pigment paste has solids content: 69.43% by weight (1 hour at 110 °C).

### Preparation H: Pigment Paste With Molybdenum Oxide

A premix is first formed from 125 parts of water and 594 parts of the grinding resin of Preparation B. Then 7 parts of acetic acid, 9 parts of TETRONIC® 901, 8 parts of carbon black, 26 parts of molybdenum oxide, 547 parts of titanium dioxide TI-PURE® R 900 (DuPont, USA), 44 parts of di-n-butyl tin oxide, 47 parts of bismuth subsalicylate, and 120 parts of ASP200 clay are added. The mixture is predispersed for 30 minutes under a high-speed dissolver stirrer. The mixture is subsequently dispersed in a small laboratory mill (Motor Mini Mill, Eiger Engineering Ltd, Great Britain) until it measures a Hegmann fineness of less than or equal to 12 µm and is adjusted to solids content with additional water. The obtained pigment paste has solids content: 69.43% by weight (1 hour at 110 °C).

### Preparation I: Pigment Paste

A premix is first formed from 125 parts of water and 594 parts of the grinding resin of Preparation B. Then 7 parts of acetic acid, 9 parts of TETRONIC® 901, 8 parts of carbon black, 547 parts of titanium dioxide TI-PURE® R 900 (DuPont, USA), 44 parts of di-n-butyl tin oxide, 47 parts of bismuth subsalicylate, and 120 parts of ASP200 clay (Langer & Co./Germany) are added. The mixture is predispersed for 30 minutes under a high-speed dissolver stirrer. The mixture is subsequently dispersed in a small laboratory mill (Motor Mini Mill, Eiger Engineering Ltd, Great Britain) until it measures a Hegmann fineness of less than or equal to 12 µm and is adjusted to solids content with additional water. The obtained pigment paste has solids content: 69.43% by weight (1 hour at 110 °C).

### Example 1

An electrocoat bath is prepared by combining 1165.34 parts Preparation A, 154.04 parts Preparation C, and 1680.62 parts deionized water. The water and Preparation A resin emulsion are combined in a container with constant stirring, and Preparation B is added with stirring. The bath solid contents are 19% by weight.

Example 1 is tested by coating both phosphated and bare cold rolled steel 4-inch-by-6-inch test panels at 225 volts (0.5 ampere) in Example 1 at bath temperatures from 88-98°F (31-36.7°C) for 2.2 minutes and baking the coated panels for 28 minutes at 350°F (177°C). The deposited, baked coating has a filmbuild of about 0.8 mil (20 µm). Three panels were coated for each temperature and substrate.

Control panels were prepared in the same way using U32AD500 (commercial product sold by BASF Corporation).

After baking, each panel is scribed directly down the middle and tested in accordance with GMW14872. The test description is as follows: For 8 hours the test panels are subjected to contaminant spray of salt solution consists of 0.5% NaCl, 0.1% CaCl₂ and 0.075% NaHCO₃ at 25°C and 45% relative humidity (RH). Next the test panels are subjected to 49°C and a RH of 100% for 8 hours, followed by a dry stage where panels are subjected to 60°C at <30% RH for 8 hours. The cycle is repeated until cold rolled steel (CRS) (per SAEJ2329 CRIE, uncoated) coupons reach 3.9 gm weight loss. After completion, each panel is rinsed with water and scraped with a metal spatula. The corrosion is measured as the average of scribe width of selected points along the scribe length.

Results are as tested on bare cold rolled steel.

| System | GMW14872 avg. mm Scribe Width |
|---|---|
| Example 1 | 10.7 |
| Control | 13 |

### Example 2

An electrocoat bath is prepared in the same way as in Example 1 but using Preparation D in the place of Preparation C. Panels are coated from Example 2 electrocoat coating bath and baked in the same way as described for Example 1.

### Example 3

An electrocoat bath is prepared in the same way as in Example 1 but using Preparation E in the place of Preparation C. Panels are coated from Example 3 electrocoat coating bath and baked in the same way as described for Example 1.

### Example 4

An electrocoat bath is prepared in the same way as in Example 1 but using Preparation F in the place of Preparation C. Panels are coated from Example 4 electrocoat coating bath and baked in the same way as described for Example 1.

### Example 5

An electrocoat bath is prepared in the same way as in Example 1 but using Preparation G in the place of Preparation C. Panels are coated from Example 5 electrocoat coating bath and baked in the same way as described for Example 1.

### Example 6

An electrocoat bath is prepared in the same way as in Example 1 but using Preparation H in the place of Preparation C. Panels are coated from Example 6 electrocoat coating bath and baked in the same way as described for Example 1.

Coated panels are prepared from Examples 2-6 by coating both phosphated and bare cold rolled steel 4-inch-by-6-inch test panels at 100 to 225 volts (0.5 ampere) in each one of Examples 2-6 at bath temperatures from 88-98°F (31-36.7°C) for 2.2 minutes and baking the coated panels for 28 minutes at 350°F (177°C). The deposited, baked coatings have a filmbuild of about 0.8 mil (20 µm).

### Example 7

A bath was prepared by combining 933.3 parts Preparation A, 149.7 parts Preparation I, and 1417 parts deionized water. The water and Preparation A resin emulsion are combined in a container with constant stirring, and Preparation I is added with stirring. The bath solid contents are 19% by weight.

Example 7 is tested by coating both phosphated and bare cold rolled steel 4-inch-by-6-inch test panels at 100-225 volts (0.5 ampere) in Example at bath temperatures from 88-98°F (31-36.7°C) for 2.2 minutes and baking the coated panels for 28 minutes at 350°F (177°C). The deposited, baked coating has a filmbuild of about 0.8 mil (20 µm). Three panels were coated for each temperature and substrate.

### Control

Control panels were prepared as described for Example 7 but using U32AD500 (commercial product sold by BASF Corporation).

After baking, each panel is scribed directly down the middle and tested in accordance with GMW14872. The test description is as follows: For 8 hours the test panels are subjected to contaminant spray of salt solution consists of 0.5% NaCl, 0.1% CaCl₂ and 0.075% NaHCO₃ at 25°C and 45% relative humidity (RH). Next the test panels are subjected to 49°C and a RH of 100% for 8 hours, followed by a dry stage where panels are subjected to 60°C at <30% RH for 8 hours. The cycle is repeated until cold rolled steel (CRS) (per SAEJ2329 CRIE, uncoated) coupons reach 3.9 gm weight loss. After completion, each panel is rinsed with water and scraped with a metal spatula. The corrosion is measured as the average of scribe width of selected points along the scribe length. The test results over the bare, cold rolled steel panels are shown in the table that follows.

| System | GMW14872 avg. mm Scribe Width |
|---|---|
| Example 7 | 12.1 |
| Control | 13 |

The description is merely exemplary in nature and, thus, variations that do not depart from the gist of the disclosure are a part of the invention. Variations are not to be regarded as a departure from the spirit and scope of the disclosure.

## Claims

1. An aqueous coating composition comprising an electrodepositable binder, the binder comprising a aromatic amine group-containing resin.

2. An aqueous coating composition according to claim 1, further comprising a metal oxide selected from the group consisting of bismuth oxide, vanadium oxide, manganese oxide, cobalt oxide, zinc oxide, strontium oxide, yttrium oxide, molybdenum oxide, zirconium oxide, lanthanum oxide, oxides of the lanthanide series of elements and combinations thereof.

3. An aqueous coating composition according to claim 1 or claim 2, wherein the aromatic amine group-containing resin is an epoxy resin or an acrylic resin.

4. An aqueous coating composition according to any one of claims 1-3, wherein the binder is cathodically electrodepositable.

5. An aqueous coating composition according to any one of claims 1-4, wherein the aromatic amine group-containing resin comprises a pyridinine group, a pyrazine group, a pyrimidine group, a pyridazine group, a phezine group, an isoqinoline group, a quiinoline group, a phthalazine group, a phthrydine group, a cinnoline group, a carbazole group, a purine group, a triazole group, a benzimidazole group, a benzimidazolone group, a thiazole group, a benzothiazole group, a pyrazole group, a pyrazolone group, a thiadiazole group, or a combination thereof.

6. An aqueous coating composition according to any one of claims 1-4, wherein the aromatic amine group-containing resin comprises a pyridine group or an alkylenepyridine group.

7. An aqueous coating composition according to any one of claims 1-6, wherein the aromatic amine group-containing resin further comprises an aliphatic amine group.

8. An aqueous coating composition according to any one of claims 1-7, wherein the binder further comprises a second amine-functional resin.

9. An aqueous coating composition according to any one of claims 1-8, further comprising a crosslinker reactive with the aromatic amine group-containing resin.

10. An aqueous coating composition according to claim 9, further comprising a second amine-functional resin reactive with the crosslinker, wherein the second amine-functional resin does not include aromatic amine groups.

11. An aqueous coating composition according to any one of claims 2-10, wherein the metal oxide is selected from the group consisting of bismuth oxide, vanadium oxide, manganese oxide, cobalt oxide, zinc oxide, yttrium oxide, molybdenum oxide, zirconium oxide, and combinations thereof.

12. An aqueous coating composition according to any one of claims 2-11, comprising from about 0.01 to about 1 percent by weight of the metal oxide based on total binder solids weight.

13. A method of coating a metal automotive vehicle body, comprising:
(a) cleaning the metal automotive vehicle body;
(b) placing the cleaned metal automotive vehicle body into an aqueous coating composition according to any one of claims 1-12;
(c) connecting the metal automotive vehicle body as an electrode in an electric circuit and passing a current through the aqueous electrodeposition coating composition to deposit a coating layer onto the metal automotive vehicle body.

14. A method of coating an electrically conductive substrate according to claim 13, wherein the metal automotive vehicle body is free of a phosphate pre-treatment.

15. A coated substrate prepared according to the method of claim 13 or the method of claim 14.

## Patentansprüche

1. Wässrige Beschichtungszusammensetzung, umfassend ein elektrisch abscheidbares Bindemittel, wobei das Bindemittel ein eine aromatische Amingruppe enthaltendes Harz umfasst.

2. Wässrige Beschichtungszusammensetzung nach Anspruch 1, ferner umfassend ein Metalloxid aus der Gruppe bestehend aus Bismutoxid, Vanadiumoxid, Manganoxid, Cobaltoxid, Zinkoxid, Strontiumoxid, Yttriumoxid, Molybdänoxid, Zirconiumoxid, Lanthanoxid, Oxiden der Lanthanidenelementreihe und Kombinationen davon.

3. Wässrige Beschichtungszusammensetzung nach Anspruch 1 oder Anspruch 2, wobei es sich bei dem eine aromatische Amingruppe enthaltenden Harz um ein Epoxidharz oder ein Acrylharz handelt.

4. Wässrige Beschichtungszusammensetzung nach einem der Ansprüche 1-3, wobei das Bindemittel kathodisch abscheidbar ist.

5. Wässrige Beschichtungszusammensetzung nach einem der Ansprüche 1-4, wobei das eine aromatische Amingruppe enthaltende Harz eine Pyridingruppe, eine Pyrazingruppe, eine Pyrimidingruppe, eine Pyridazingruppe, eine Phezingruppe, eine Isochinolingruppe, eine Chinolingruppe, eine Phthalazingruppe, eine Phthyridingruppe, eine Cinnolingruppe, eine Carbazolgruppe, eine Puringruppe, eine Triazolgruppe, eine Benzimidazolgruppe, eine Benzimidazolongruppe, eine Thiazolgruppe, eine Benzothiazolgruppe, eine Pyrazolgruppe, eine Pyrazolongruppe, eine Thiadiazolgruppe oder eine Kombination davon umfasst.

6. Wässrige Beschichtungszusammensetzung nach einem der Ansprüche 1-4, wobei das eine aromatische Amingruppe enthaltende Harz eine Pyridingruppe oder eine Alkylenpyridingruppe umfasst.

7. Wässrige Beschichtungszusammensetzung nach einem der Ansprüche 1-6, wobei das eine aromatische Amingruppe enthaltende Harz ferner eine aliphatische Amingruppe umfasst.

8. Wässrige Beschichtungszusammensetzung nach einem der Ansprüche 1-7, wobei das Bindemittel ferner ein zweites aminfunktionelles Harz umfasst.

9. Wässrige Beschichtungszusammensetzung nach einem der Ansprüche 1-8, ferner umfassend einen gegenüber dem eine aromatische Aminogruppe enthaltenden Harz reaktiven Vernetzer.

10. Wässrige Beschichtungszusammensetzung nach Anspruch 9, ferner umfassend ein zweites aminfunktionelles Harz, das gegenüber dem Vernetzer reaktiv ist, wobei das zweite aminfunktionelle Harz keine aromatischen Amingruppen enthält.

11. Wässrige Beschichtungszusammensetzung nach einem der Ansprüche 2-10, wobei das Metalloxid aus der Gruppe bestehend aus Bismutoxid, Vanadiumoxid, Manganoxid, Cobaltoxid, Zinkoxid, Yttriumoxid, Molybdänoxid, Zirconiumoxid und Kombinationen davon ausgewählt ist.

12. Wässrige Beschichtungszusammensetzung nach einem der Ansprüche 2-11, umfassend etwa 0,01 bis etwa 1 Gewichtsprozent des Metalloxids, bezogen auf das Gesamtfeststoffgewicht des Bindemittels.

13. Verfahren zum Beschichten einer Metallkarosserie eines Fahrzeugs, bei dem man:
(a) die Metallkarosserie eines Fahrzeugs reinigt;
(b) die gereinigte Metallkarosserie eines Fahrzeugs in eine wässrige Beschichtungszusammensetzung nach einem der Ansprüche 1-12 einbringt;
(c) die Metallkarosserie eines Fahrzeugs als Elektrode in einem elektrischen Schaltkreis anschließt und zur Abscheidung einer Beschichtungsschicht auf der Metallkarosserie eines Fahrzeugs einen Strom durch die wässrige elektrisch abscheidbare Beschichtungszusammensetzung leitet.

14. Verfahren zum Beschichten eines elektrisch leitfähigen Substrats nach Anspruch 13, bei dem die Metallkarosserie eines Fahrzeugs frei von einer Phosphat-Vorbehandlung ist.

15. Beschichtetes Substrat, hergestellt nach dem Verfahren nach Anspruch 13 oder dem Verfahren nach Anspruch 14.

## Revendications

1. Composition aqueuse de revêtement comprenant un liant électrodéposable, le liant comprenant une résine contenant un groupe amine aromatique.

2. Composition aqueuse de revêtement selon la revendication 1, comprenant en outre un oxyde métallique choisi dans le groupe constitué par l'oxyde de bismuth, l'oxyde de vanadium, l'oxyde de manganèse, l'oxyde de cobalt, l'oxyde de zinc, l'oxyde de strontium, l'oxyde d'yttrium, l'oxyde de molybdène, l'oxyde de zirconium, l'oxyde de lanthane, les oxydes de la série d'éléments des lanthanides et les combinaisons de ceux-ci.

3. Composition aqueuse de revêtement selon la revendication 1 ou la revendication 2, dans laquelle la résine contenant un groupe amine aromatique est une résine époxyde ou une résine acrylique.

4. Composition aqueuse de revêtement selon l'une quelconque des revendications 1 à 3, dans laquelle le liant est électrodéposable cathodiquement.

5. Composition aqueuse de revêtement selon l'une quelconque des revendications 1 à 4, dans laquelle la résine contenant un groupe amine aromatique comprend un groupe pyridine, un groupe pyrazine, un groupe pyrimidine, un groupe pyridazine, un groupe phézine, un groupe isoquinoline, un groupe quinoline, un groupe phtalazine, un groupe phtrydine, un groupe cinnoline, un groupe carbazole, un groupe purine, un groupe triazole, un groupe benzimidazole, un groupe benzimidazolone, un groupe thiazole, un groupe benzothiazole, un groupe pyrazole, un groupe pyrazolone, un groupe thiadiazole, ou une combinaison de ceux-ci.

6. Composition aqueuse de revêtement selon l'une quelconque des revendications 1 à 4, dans laquelle la résine contenant un groupe amine aromatique comprend un groupe pyridine ou un groupe alkylènepyridine.

7. Composition aqueuse de revêtement selon l'une quelconque des revendications 1 à 6, dans laquelle la résine contenant un groupe amine aromatique comprend en outre un groupe amine aliphatique.

8. Composition aqueuse de revêtement selon l'une quelconque des revendications 1 à 7, dans laquelle le liant comprend en outre une deuxième résine aminofonctionnelle.

9. Composition aqueuse de revêtement selon l'une quelconque des revendications 1 à 8, comprenant en outre un agent de réticulation réactif avec la résine contenant un groupe amine aromatique.

10. Composition aqueuse de revêtement selon la revendication 9, comprenant en outre une deuxième résine aminofonctionnelle réactive avec l'agent de réticulation, la deuxième résine aminofonctionnelle ne comportant pas de groupes amine aromatiques.

11. Composition aqueuse de revêtement selon l'une quelconque des revendications 2 à 10, dans laquelle l'oxyde métallique est choisi dans le groupe constitué par l'oxyde de bismuth, l'oxyde de vanadium, l'oxyde de manganèse, l'oxyde de cobalt, l'oxyde de zinc, l'oxyde d'yttrium, l'oxyde de molybdène, l'oxyde de zirconium, et les combinaisons de ceux-ci.

12. Composition aqueuse de revêtement selon l'une quelconque des revendications 2 à 11, comprenant environ 0,01 à environ 1 pour cent en poids de l'oxyde métallique, rapporté au poids total de matières solides liantes.

13. Procédé de revêtement d'une carrosserie métallique de véhicule automobile, comprenant :
(a) le nettoyage de la carrosserie métallique de véhicule automobile ;
(b) le positionnement de la carrosserie métallique de véhicule automobile nettoyée dans une composition aqueuse de revêtement selon l'une quelconque des revendications 1 à 12 ;
(c) le branchement de la carrosserie métallique de véhicule automobile en tant qu'électrode dans un circuit électrique et le passage d'un courant à travers la composition aqueuse de revêtement par électrodéposition pour déposer une couche de revêtement sur la carrosserie métallique de véhicule automobile.

14. Procédé de revêtement d'un substrat électriquement conducteur selon la revendication 13, dans lequel la carrosserie métallique de véhicule automobile est dépourvue d'un prétraitement au phosphate.

15. Substrat revêtu préparé selon le procédé de la revendication 13 ou le procédé de la revendication 14.
